# EUROPEAN PATENT APPLICATION

(11) **EP 2 508 477 A1**
(43) Date of publication of application: **10.10.2012**
(21) Application number: 10834428.4
(22) Date of filing: 22.09.2010
(51) Int. Cl.: C01B 31/30

(54) **PRODUCTION METHOD FOR CARBON MATERIAL**

(30) Priority: 02.12.2009 JP 2009274640
(71) Applicant: Toyo Tanso Co., Ltd., Osaka-shi Osaka 555-0011 (JP)
(72) Inventor: MATSUNAGA, Hiroaki, Kanonji-shi Kagawa 769-1612 (JP); SETANI, Kaoru, Kanonji-shi Kagawa 769-1612 (JP); ISHII, Takugo, Osaka-shi Osaka 555-0011 (JP); TAKEDA, Akiyoshi, Kanonji-shi Kagawa 769-1612 (JP)
(74) Representative: Glawe, Delfs, Moll
(86) International application number: PCT/JP2010/066393
(87) International publication number: WO 2011/067975

(57) **Abstract**

A method of manufacturing a carbon material that can prevent formation of unevenness of a coating film and degradation in adhesivity of the coating film, by inhibiting a carbon substrate from forming a portion in which a metal carbide layer is not formed. The method is characterized by including a first step of causing metal powder to adhere to a carbon substrate by coating the carbon substrate with a slurry containing the metal powder and polyvinyl alcohol as a binder, and a second step of heat-treating the carbon substrate to which the metal powder has adhered in a vessel containing an atmosphere of hydrogen chloride gas.

## Description

### TECHNICAL FIELD

The present invention relates to a method of manufacturing a surface-modified carbon material.

### BACKGROUND ART

A carbon material is light in weight and excellent in chemical and thermal stability and has good thermal conductivity and electrical conductivity even though it is a non-metal material. However, problems with the basic characteristics of the carbon material include dust emission and difficulty in adhering to ceramics, metals, and resins.

As a method for improving the adhesivity, for example, Patent Document 1 shows a proposed method including attaching or printing, onto a graphite surface, metal powder that reacts with carbon to form a carbide, heating the resultant article in a non-oxidizing atmosphere to 800°C to 2000°C to form a metal carbide layer on the graphite surface, thereafter metal plating a surface of the metal carbide layer to metallize the graphite surface, and further joining the resultant article to another member using soft solder or hard solder.
Patent Documents 2 and 3 describe that a carbon material is buried in an infiltrating agent that produces chromium halide gas and is heat-treated.

### CITATION LIST

### Patent Literature

[Patent Document 1] Japanese Unexamined Patent Application Publication No. Hei 01(1989)-203209
[Patent Document 2] Japanese Unexamined Patent Application Publication No. Hei 08(1996)-143384
[Patent Document 3] Japanese Unexamined Patent Application Publication No. Hei 08(1996)-143385

### SUMMARY OF INVENTION

### TECHNICAL PROBLEM

However, by merely attaching or printing metal powder and then heating the material as described in Patent Document 1, a portion in which the metal carbide layer is not formed remains in the carbon substrate. Consequently, problems arise that unevenness is produced in the coating film and the adhesivity of the coating film degrades. The method of burying a carbon material in an infiltrating agent and treating the material, as described in Patent Documents 2 and 3, has the problem that a component of the infiltrating agent adheres to the carbon material. In addition, since it is necessary to pass hydrogen gas through the substance that constitutes the infiltrating agent, variations in product quality occur because of temperature unevenness, and a detector is required to enable hydrogen gas to flow through the equipment. Those factors have increased the cost.
The present invention has been accomplished in view of the foregoing problems, and it is an object of the present invention to provide a carbon material that can prevent unevenness in a coating film and degradation of the adhesivity of the coating film by inhibiting a portion in which a metal carbide layer is not formed from forming in a carbon substrate, and that makes it possible to form a metal carbide in a selected portion thereof and to eliminate excessive manufacturing equipment by causing metal powder to adhere thereto.

### SOLUTION TO PROBLEM

The present invention provides a method of manufacturing a carbon material, characterized by comprising: a first step of causing metal powder to adhere to a carbon substrate; and a second step of heat-treating the carbon substrate to which the metal powder has adhered in a vessel containing an atmosphere of hydrogen halide gas.
When the metal powder is heat-treated under an atmosphere of hydrogen halide gas as in the above-described manufacturing method, a metal carbide layer is uniformly formed over a surface of the carbon substrate. Therefore, a portion in which the metal carbide layer is not formed is prevented from forming in the carbon substrate. As a result, it is possible to inhibit formation of unevenness in the coating film and degradation in the adhesivity of the coating film.
In addition, when the metal layer or the like is formed by plating, thermal spraying, or the like after the formation of the metal carbide layer, the bonding strength of the metal layer increases. On the other hand, when the carbon material is used as it is after the formation of the metal carbide layer, generation of dust can be prevented.

It is desirable that in the first step, the metal powder be caused to adhere to the carbon substrate by coating a slurry containing the metal powder and a binder onto the carbon substrate or dipping the carbon substrate into the slurry.
The reason is that when the metal powder is coated onto the carbon substrate using the slurry containing a binder, the metal powder can be coated uniformly and smoothly over a surface of the carbon substrate. Preferable examples of the binder include resin components that are soluble in a solvent, and especially include water-soluble resins, which are soluble in water. Preferable examples of the water-soluble resins include ones that can be burned up during the heat treatment so as not to remain in the carbon material and not to cause adverse effects, and polyvinyl alcohol (PVA) is especially preferable because it is easily available and low cost.

It is desirable that in the second step, the hydrogen halide gas be a hydrogen chloride gas.
The reason is that when the hydrogen halide gas is a hydrogen chloride gas, formation of unevenness in the coating film and degradation of the adhesivity of the coating film can further be inhibited, and moreover, the carbon material can be manufactured at low cost.

It is desirable that in the second step, the carbon substrate to which the metal powder has adhered and ammonium chloride be enclosed in one and the same vessel and heat-treated.
When using ammonium chloride as a hydrogen chloride generating agent, ammonium chloride is easy to handle since ammonium chloride is a solid substance. In addition, the hydrogen chloride gas that is generated from ammonium chloride by heating can change the interior of the vessel into a hydrogen chloride gas atmosphere. As a result, the method of the present invention can be performed easily.

It is desirable that the amount of the ammonium chloride that is contained in the vessel be 1.00 × 10⁻⁴ g/cm³ or more with respect to the volume of the vessel.
The reason is that if the amount of ammonium chloride per unit volume is less than 1.00 × 10⁻⁴ g/cm³, it becomes difficult to form a coating film with good quality. On the other hand, when the amount of ammonium chloride is too large, the resulting advantageous effects do not exceed a certain level, and moreover, the production cost of the carbon material substantially rises. For these reasons, it is desirable that the amount of the ammonium chloride be 1.00 × 10⁻² g/cm³ or less.

It is desirable that the metal powder be chromium powder.
However, the metal powder is not limited to the chromium powder, and it is possible to use a particulate material of an alloy containing chromium, such as stainless steel.

### ADVANTAGEOUS EFFECTS OF INVENTION

The method of manufacturing a carbon material according to the present invention makes it possible to inhibit a portion in which a metal carbide layer is not formed from forming in a carbon substrate. As a result, it becomes possible to inhibit formation of unevenness in the coating film and degradation in the adhesivity of the coating film.

### BRIEF DESCRIPTION OF DRAWINGS

[Fig. 1] Figure 1 shows illustrative diagrams showing a manufacturing process of a carbon material in the case where the proportion of PVA in a slurry is too large (i.e., the proportion of chromium is too small).
[Fig. 2] Figure 2 shows illustrative diagrams showing a manufacturing process of a carbon material in the case where the proportion of PVA in a slurry is too small (i.e., the proportion of chromium is too large).
[Fig. 3] Figure 3 is an image of the appearance of the present invention material B1 [the amount of chromium is 66.7 weight percent (wt%) and the heat treatment time is 0.5 hours].
[Fig. 4] Figure 4 is an image of the appearance of the present invention material B2 (the amount of Chromium is 66.7 wt% and the heat treatment time is 3 hours).
[Fig. 5] Figure 5 is an image of the appearance of the present invention material B3 (the amount of chromium is 66.7 wt% and the heat treatment time is 10 hours).
[Fig. 6] Figure 6 is a SEM image of a portion of the present invention material B1 in which surface unevenness (bumps and crevices) is formed.
[Fig. 7] Figure 7 is a SEM image of a portion of the present invention material B2 in which surface unevenness is formed.
[Fig. 8] Figure 8 is a SEM image of a portion of the present invention material B3 in which surface unevenness is formed.
[Fig. 9] Figure 9 is an X-ray diffraction image of the present invention materials B1 to B3.
[Fig. 10] Figure 10 is a SEM image showing the condition of a cross section of the present invention material B1.
[Fig. 11] Figure 11 is a SEM image showing the condition of a cross section of the present invention material B2.
[Fig. 12] Figure 12 is a SEM image showing the condition of a cross section of the present invention material B3.
[Fig. 13] Figure 13 is an image of the appearance of the present invention material D1 (the amount of chromium is 16.7 wt% and the heat treatment time is 0.5 hours).
[Fig. 14] Figure 14 is an image of the appearance of the present invention material D2 (the amount of Chromium is 16.7 wt% and the heat treatment time is 3 hours).
[Fig. 15] Figure 15 is an image of the appearance of the present invention material D3 (the amount of chromium is 16.7 wt% and the heat treatment time is 10 hours).
[Fig. 16] Figure 16 is a SEM image of a portion of the present invention material D1 in which surface unevenness is formed.
[Fig. 17] Figure 17 is a SEM image of a portion of the present invention material D2 in which surface unevenness is formed.
[Fig. 18] Figure 18 is a SEM image of a portion of the present invention material D3 in which surface unevenness is formed.
[Fig. 19] Figure 19 is an X-ray diffraction image of the present invention materials D1 to D3.
[Fig. 20] Figure 20 is a SEM image showing the condition of a cross section of the present invention material D1.
[Fig. 21] Figure 21 is a SEM image showing the condition of a cross section of the present invention material D2.
[Fig. 22] Figure 22 is a SEM image showing the condition of a cross section of the present invention material D3.

### DESCRIPTION OF EMBODIMENTS

Hereinbelow, the present invention will be described in detail.
In a method of manufacturing a carbon material according to the present invention, metal powder is caused to adhere to a carbon substrate, and thereafter, the carbon substrate to which the metal powder has adhered is heat-treated in a vessel containing an atmosphere of hydrogen halide gas. This manufacturing method makes it possible to form a metal carbide layer on a surface of the carbon substrate in a simple manner.

Here, it is preferable that the heat treatment be performed at a temperature of from 800°C to 1200°C. If the temperature of the heat treatment is too low, it is possible that the formation of the metal carbide layer (for example, chromium carbide) may be slow, and also the layer may not desirably be formed. On the other hand, if the temperature is too high, it is possible that the powder that has not reacted in the heat treatment may be bonded to the carbon substrate.

In addition, it is preferable that the duration of the heat treatment be from 10 to 24 hours. If the treatment duration is too short, the metal carbide layer may not uniformly be formed. On the other hand, if the treatment duration is too long, the formation of the layer will not take place any longer, and moreover, the heat energy required for heating will be correspondingly larger, increasing the production cost.

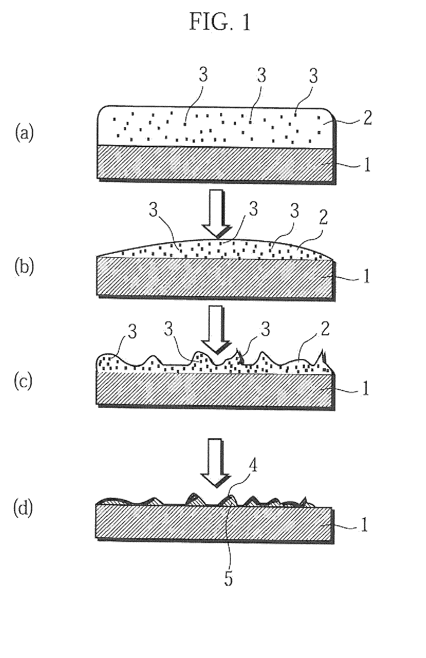

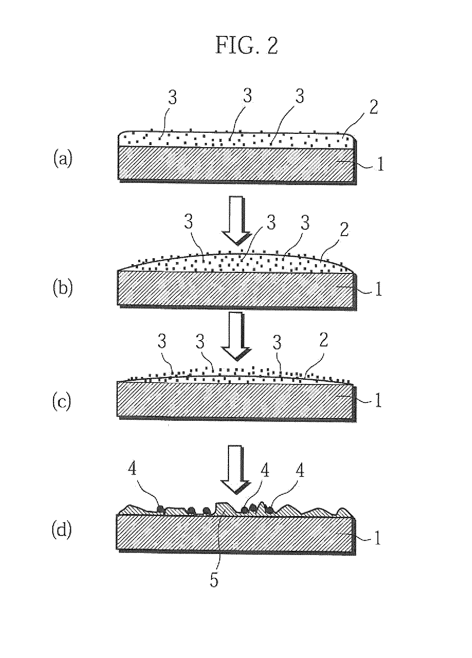

An example of the method for causing the metal powder to adhere to the carbon substrate is a method of coating a slurry containing metal powder and polyvinyl alcohol (PVA) serving as the binder, as described above, onto the carbon substrate by, for example, printing, screen coating, spin coating, and dip coating. In this case, it is preferable that the amount of the metal powder (for example, Chromium) to be attached to the carbon substrate (i.e., the amount of chromium per unit area of the carbon substrate) be from 2.0 × 10⁻² g/cm² to 8.0 × 10⁻² g/cm². In addition, it is preferable that the amount of the binder to be attached to the carbon substrate be from 1.0 × 10⁻³ g/cm² to 7.0 × 10⁻³ g/cm².
This will be discussed with reference to Figs. 1(a) to 1(d) and Figs. 2(a) to 2(d).

Figs. 1(a) to 1(d) are illustrative diagrams showing a manufacturing process of a carbon material in the case where the amount of PVA coated onto the substrate is too large. Figs. 2(a) to 2(d) are illustrative diagrams showing a manufacturing process of a carbon material in the case where the amount of chromium coated onto the substrate is too large. Figs. 1(a) and 2(a) illustrate a case in which a slurry is coated onto a surface of a carbon substrate 1. Figs. 1(b), 1(c), 2(b), and 2(c) illustrate a case in which the temperature of the carbon substrate 1 has reached from 250°C to 500°C (a temperature at which decomposition of PVA and ammonium chloride takes place). Figs. 1(d) and 2(d) illustrate a case in which the temperature of the carbon substrate 1 has reached 650°C or higher (a temperature at which Chromium carbide is generated). In Figs. 1(a) to 1(d) and Figs. 2(a) to 2(d), reference numeral 1 denotes a carbon substrate, reference numeral 2 denotes PVA, reference numeral 3 denotes chromium, reference numeral 4 denotes carbonized PVA, and reference numeral 5 denotes chromium carbide.

First, in the case where the amount of the PVA coated on the substrate is too large, bumps and crevices form on the surface as illustrated in Fig. 1(c) when the temperature reaches 250°C to 500°C. As a consequence, it is presumed that when the temperature becomes 650°C or higher, bumps and crevices are formed on the surface of the carbon substrate 1 by the carbonized PVA 4, as illustrated in Fig. 1(d).
On the other hand, in the case where the amount of the Chromium coated on the substrate is too large, bumps and crevices do not form on the surface as illustrated in Figs. 2(b) and 2(c) even when the temperature reaches 250°C to 500°C. However, it is presumed that when the temperature becomes 650°C or higher, bumps and crevices are formed on the surface of the carbon substrate 1 because the excessive chromium carbide 5 is produced, as illustrated in Fig. 2(d).
It should be noted that in order to obtain the above-described amount of metal powder per unit area of the carbon substrate, it is possible to repeat the coating process a plurality of times to adjust the coating amount of the slurry.
It is preferable that the amount of the binder be from 1 wt% to 5 wt% with respect to the total amount of the slurry, in order to improve the coatability to the substrate so that the amount of the metal powder can be adjusted easily.

An example of the above-mentioned vessel is a vessel made of carbon, such as a graphite crucible. When such a vessel made of carbon is used, a metal carbide layer can be formed on the carbon substrate within a short time. The reason is believed to be that, by using a vessel made of carbon, the materials contained in the powder, such as the metal particles, can be utilized efficiently for the surface treatment of the carbon substrate, so the necessary heat amount can be reduced.

It is preferable that the heat treatment be performed under normal pressure. Since the treatment can be performed under normal pressure, the equipment such as a vacuum pump is unnecessary, and the time required for reducing the pressure is also unnecessary. As a result, the treatment becomes simpler, and the treatment time reduces. Although it is possible to perform the treatment under reduced pressure, it may become difficult to cause an efficient reaction of hydrogen halide since the pyrolytic hydrogen halide generating agent may undergo violent decomposition at low temperature, and also, it is possible that the powder may scatter.

Hereinbelow, the components and members used in the present invention will be described.
Examples of the carbon substrate include, but not particularly limited to, isotropic graphite materials, anisotropic graphite materials, and carbon fiber composite materials. It is preferable that the carbon substrate have a bulk density of from 1.0 g/cm³ to 2.1 g/cm³ and a porosity of 40% or less.

In order to allow the vessel to contain an atmosphere of hydrogen halide gas, a pyrolytic hydrogen halide generating agent should be used. The pyrolytic hydrogen halide generating agent is such a substance that is kept in a solid state under room temperature and normal pressure but is decomposed by heating to generate a hydrogen halide, such as hydrogen chloride, hydrogen fluoride, and hydrogen bromide. It is preferable that the heat decomposition temperature of the pyrolytic hydrogen halide generating agent be 200°C or higher, so that the handling before the heating can be easy. The hydrogen halide generated from the pyrolytic hydrogen halide generating agent reacts with the metal particles during the heat treatment and produces a metal halide gas. By treating the carbon substrate with the metal halide gas, the metal carbide layer can be formed on a surface of the carbon substrate. Since the treatment of the carbon substrate is conducted with gas as described above, the metal carbide layer can be formed substantially uniformly on the carbon substrate even when the carbon substrate has a complicated shape with, for example, holes and grooves.
It is preferable that the pyrolytic hydrogen halide generating agent be ammonium chloride from the viewpoint of availability.

Examples of the metal particles include a powder of a transition metal, a mixture powder of a transition metal and another metal, and an alloy powder of a transition metal and another metal. Examples of the transition metal include Ti, V, Cr, Mn, Fe, Co, Ni, Cu, Zn, Zr, Nb, Mo, and Ta, but the transition metal is not particularly limited as long as it reacts with the hydrogen halide and produces a metal halide gas. The produced metal halide gas reacts with the carbon on a surface of the carbon substrate and produces a metal carbide. It is preferable that Cr be contained in the transition metals from the viewpoint of its high reactivity. A preferable example of the metal particles is an alloy powder containing Cr, such as that of stainless steel.
Especially when using metal particles comprising stainless steel, which is an alloy containing Cr, Ni, and Fe, a layer containing Ni, Fe, and chromium carbide is formed at one time of the heat treatment. Therefore, an improvement in handleability and cost reduction can be achieved.

### EXAMPLES

Hereinbelow, the present invention will be described in further detail based on examples thereof. However, the present invention is not limited thereto.

### (Example 1)

First, chromium powder and a PVA aqueous solution containing 10 wt% of polyvinyl alcohol (PVA), which is a binder, are mixed at a weight ratio of 71.5 : 28.5 to prepare a slurry, and thereafter, the resultant slurry was coated on a surface of a carbon substrate (20 mm × 20 mm) in an amount of 0.4 g. Next, the carbon substrate coated with the slurry was dried at 80°C until almost all the moisture was eliminated. Next, in a graphite crucible (the crucible was made by Toyo Tanso Co., Ltd, and the volume of the crucible was 351.68 cm³), 0.5g of ammonium chloride (NH₄Cl) (the amount thereof per unit volume of the graphite crucible, which is the vessel, is 1.42 x 10⁻³ g/cm³) and the carbon substrate coated with the slurry were placed, and a heat treatment was conducted at 1200°C for 0.5 hours, whereby a carbon material was fabricated. In the heat treatment, nitrogen was introduced from a gas inlet port, and the gas was discharged naturally from a gas exhaust port.
The carbon material fabricated in this manner is hereinafter referred to as present invention material A1.

### (Examples 2 and 3)

Carbon materials were fabricated in the same manner as described in Example 1 above, except that the heat treatment duration was set at 3 hours and 10 hours, respectively.
The carbon materials fabricated in these manners are hereinafter referred to as present invention materials A2 and A3, respectively.

### (Examples 4 to 6)

Respective carbon materials were fabricated in the same manner as described in Examples 1 through 3 above, respectively, except that in preparing the slurry, the weight ratio of the PVA aqueous solution and the chromium powder was set at 33.3 : 66.7.
The carbon materials fabricated in these manners are hereinafter referred to as present invention materials B to B3, respectively.

### (Example 7)

A carbon material was fabricated in the same manner as described in Example 4 above, except that the amount of the ammonium chloride added was set at 0.1 g (the amount thereof per unit volume of the graphite crucible, which is the vessel, was 2.84 × 10⁻⁴g/cm³),
The carbon material fabricated in this manner is hereinafter referred to as present invention material C.

### (Examples 8 to 10)

Respective carbon materials were fabricated in the same manner as described in Examples 1 through 3 above, respectively, except that in preparing the slurry, the weight ratio of the PVA aqueous solution and the Chromium powder was set at 83.3 : 16.7.
The carbon materials fabricated in these manners are hereinafter referred to as present invention materials D1 to D3, respectively.

### (Comparative Example)

A carbon material was fabricated in the same manner as described in Example 4 above, except that no ammonium chloride was added.
The carbon material fabricated in this manner is hereinafter referred to as comparative material Z.

### (Experiment 1)

The appearance of each of the present invention materials A1 to A3, B1 to B3, C, and D1 to D3 as well as the comparative material Z was observed. The results are shown in Table 1 below.

**TABLE 1**

| Material | Slurry [*Note 1] | | Amount of NH₄Cl in crucible during heat treatment (Amount of NH₄Cl per unit volume) [*Note 3] | Amount of PVA per unit area of carbon substrate | Amount of Cr per unit area of carbon substrate | Treatment temperature | Treatment time | Result of experiment |
|---|---|---|---|---|---|---|---|---|
| | Amount of PVA aqueous solution [*Note 2] | Amount of Cr powder | | | | | | |
| A1 | 71.5 wt% | 28.5 wt% | 0.5 g (1.42×10⁻³ g/cm³) | 7.15×10⁻³ g/cm² | 2.85×10⁻²g/cm² | | 0.5 hrs. | Film of chromium carbide formed (with slight unevenness) |
| A2 | | | | | | | 3 hrs. | Film of chromium carbide formed (with slight unevenness) |
| A3 | | | | | | | 10 hrs. | Film of chromium carbide formed (with slight unevenness) |
| B1 | 33.3 wt% | 66.7 wt% | | 3.33×10⁻³ g/cm² | 6.67×10⁻² g/cm² | | 0.5 hrs. | Film of chromium carbide formed (with slight unevenness) |
| B2 | | | | | | | 3 hrs. | Film of chromium carbide formed (with slight unevenness) |
| B3 | | | | | | 1200°C | 10 hrs. | Film of chromium carbide formed (almost uniform) |
| C | | | 0.1 g (2.84×10⁻⁴ g/cm³) | | | | 0.5 hrs. | Film of chromium carbide formed (with unevenness) |
| D1 | 83.3 wt% | 16.7 wt% | 0.5 g (1.42×10⁻³ g/cm³) | 8.3×10⁻³ g/cm² | 1.67×10⁻² g/cm² | | 0.5 hrs. | Film of chromium carbide formed (with unevenness) |
| D2 | | | | | | | 3 hrs. | Film of chromium carbide formed (with unevenness) |
| D3 | | | | | | | 10 hrs. | Film of chromium carbide formed (with unevenness) |
| Z (Comp.) | 33.3 wt% | 66.7 wt% | No NH₄Cl was added | 3.33×10⁻³ g/cm² | 6.67×10⁻² g/cm² | | 0.5 hrs. | Chromium attached to carbon material (Chromium particles confirmed by visual observation) |

| | | | | | | | | |
|---|---|---|---|---|---|---|---|---|
| Note 1: The slurry, is a mixture of PVA aqueous solution and Cr powder, and it contains no NH₄Cl, Note 2: PVA aqueous solution is an aqueous solution containing 10 wt% of PVA. Note 3: To calculate the amount of NH₄Cl per unit volume, the volume of the crucible was set at 351.68 cm³. | | | | | | | | |

As clearly seen from Table 1 above, it was observed that in each of the present invention materials A1 to A3, B1 to B3, C, and D1 to D3, a film of chromium carbide (Cr₃C₂) was formed one a surface of the carbon material, although some of them show slight unevenness. In contrast, in the comparative material Z, chromium particles were confirmed by visual observation. This indicates that the comparative material Z is in such a condition that chromium is firmly attached to the carbon material.

### (Experiment 2)

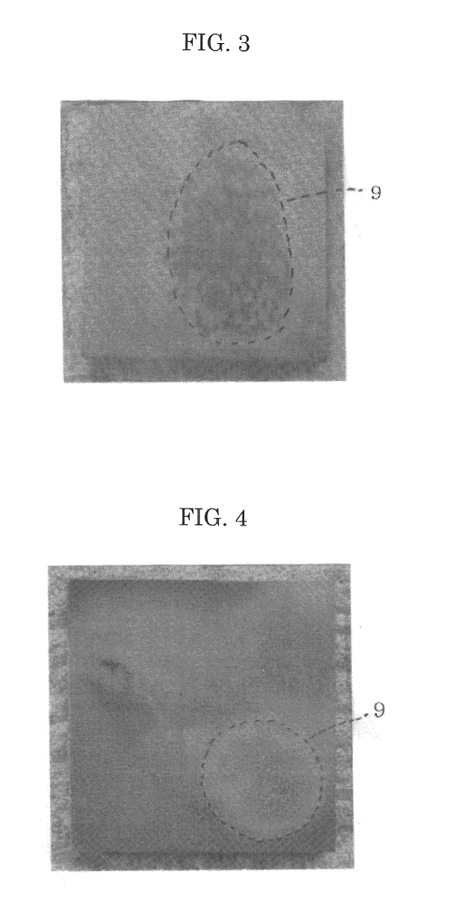

The relationship of the quality of the chromium carbide with the amount of chromium and the heat treatment time was studied. The results are discussed with reference to Figs. 3 through 22.

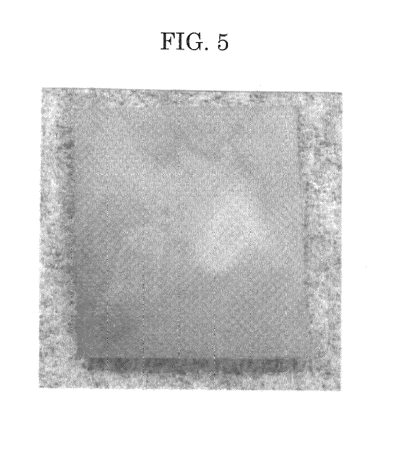

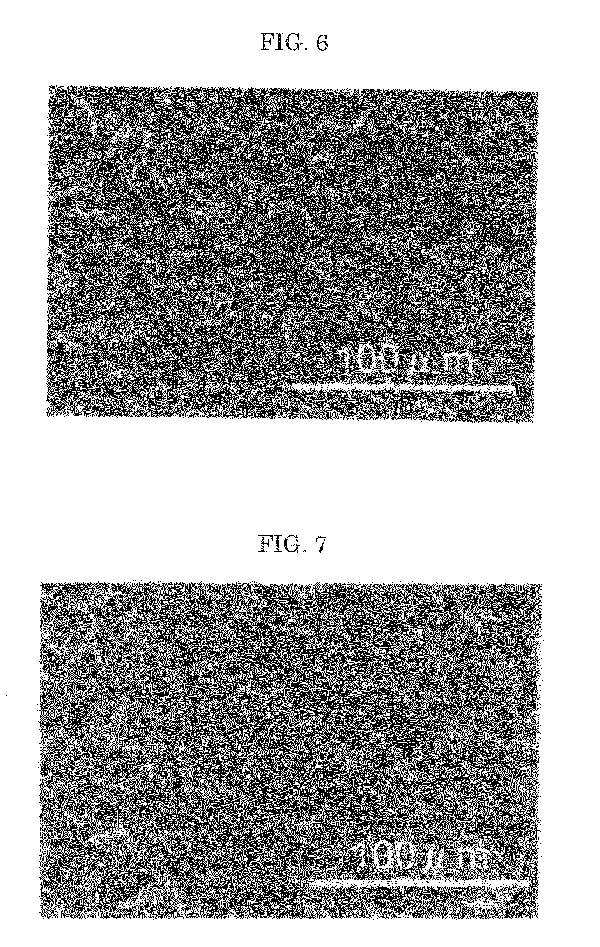

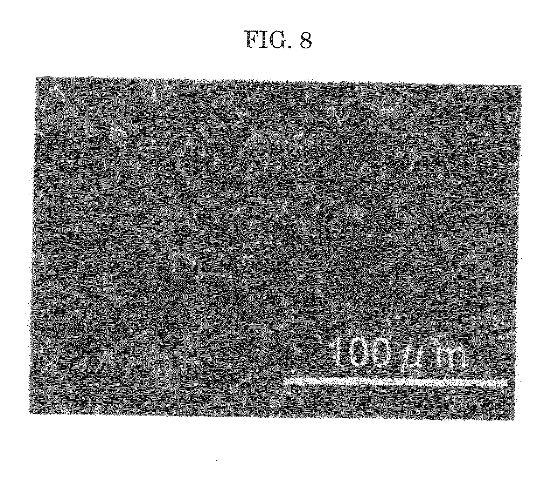

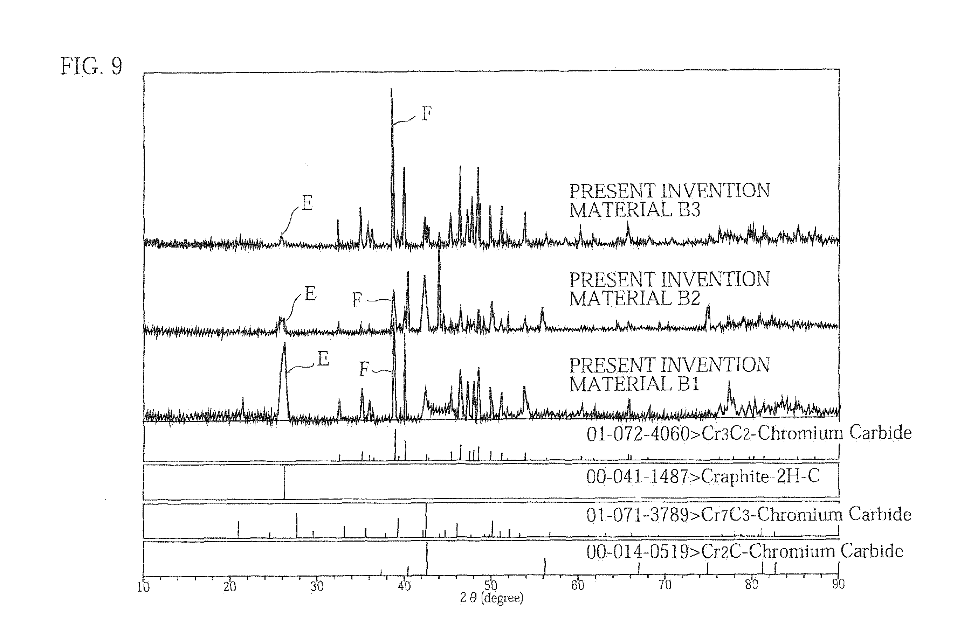

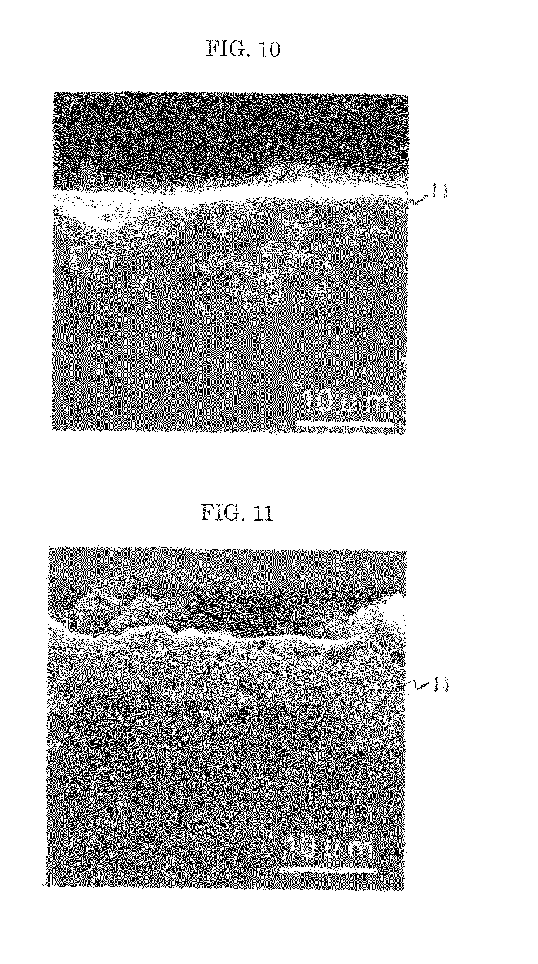

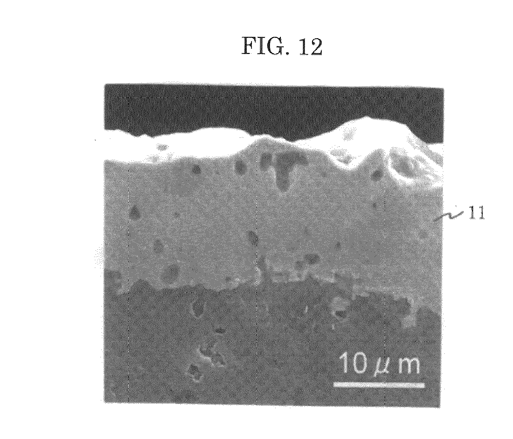

Figure 3 is an image of the appearance of the present invention material B1 (the amount of chromium in the slurry is 66.7 wt% and the heat treatment time is 0.5 hours). Figure 4 is an image of the appearance of the present invention material B2 (the amount of chromium in the slurry is 66.7 wt% and the heat treatment time is 3 hours). Figure 5 is an image of the appearance of the present invention material B3 (the amount of chromium in the slurry is 66.7 wt% and the heat treatment time is 10 hours). Figure 6 is a SEM image of a portion of the present invention material B1 in which unevenness (bumps and crevices) is formed. Figure 7 is a SEM image of a portion of the present invention material B2 in which unevenness is formed. Figure 8 is a SEM image of a portion of the present invention material B3 in which unevenness is formed. Figure 9 is an X-ray diffraction image of the present invention materials B1 to B3. Figure 10 is a SEM image showing the condition of a cross section of the present invention material B1. Figure 11 is a SEM image showing the condition of a cross section of the present invention material B2. Figure 12 is a SEM image showing the condition of a cross section of the present invention material B3.

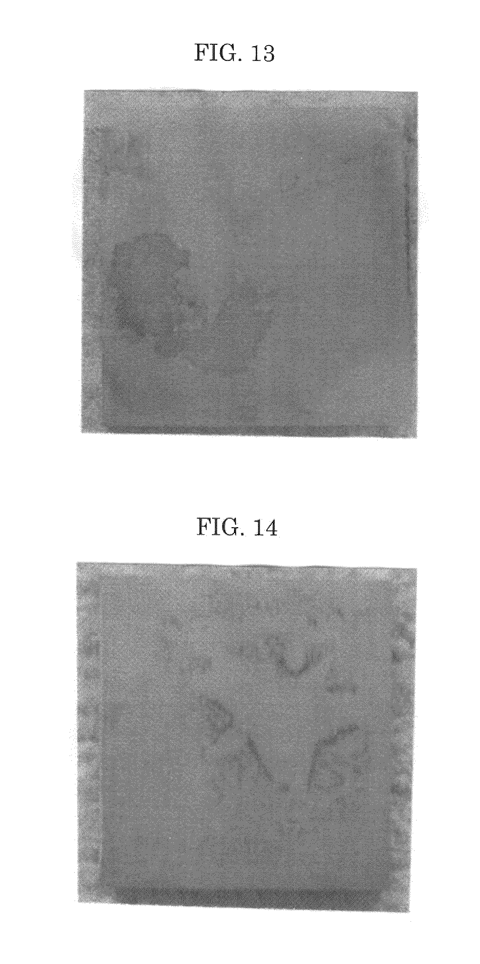

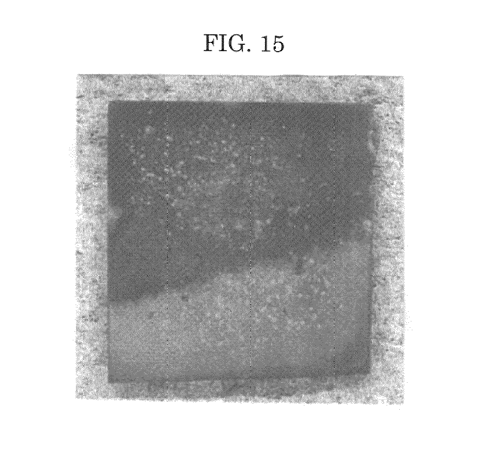

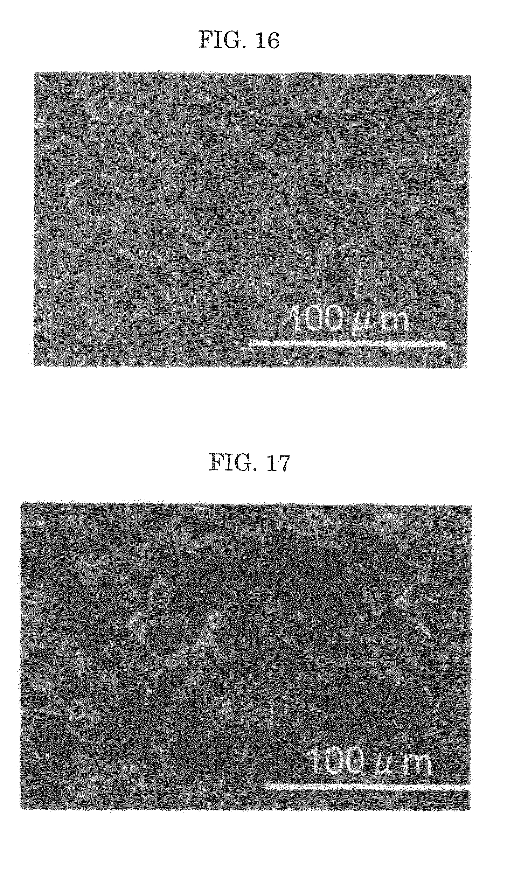

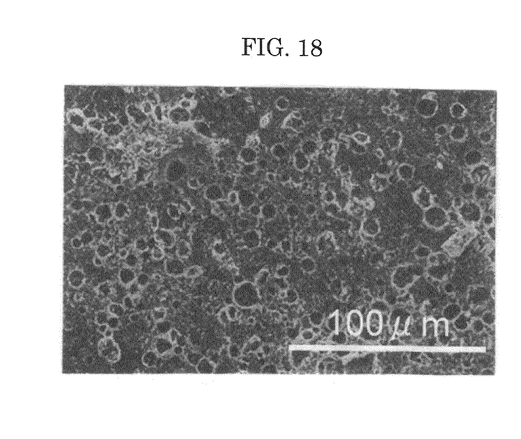

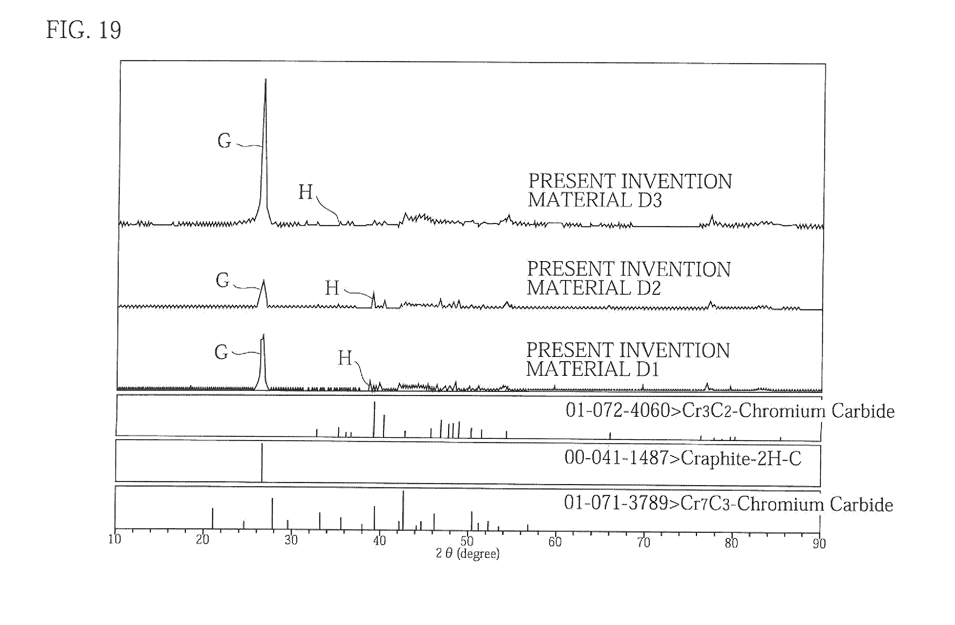

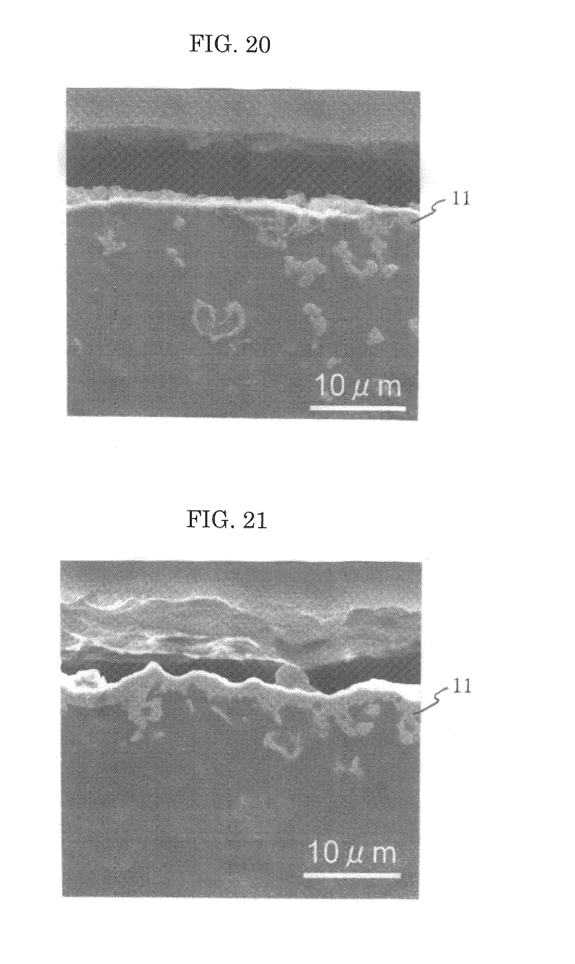

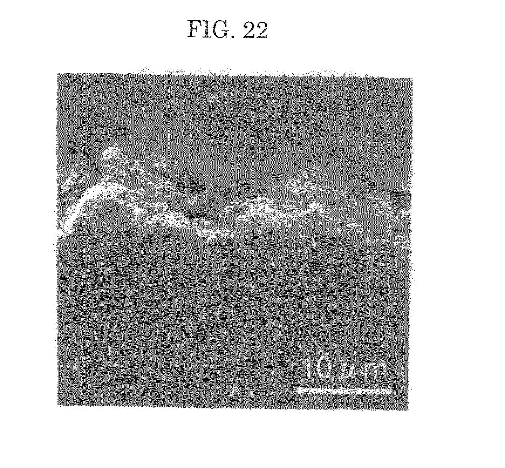

Figure 13 is an image of the appearance of the present invention material D1 (the amount of chromium in the slurry is 16.7 wt% and the heat treatment time is 0.5 hours). Figure 14 is an image of the appearance of the present invention material D2 (the amount of chromium in the slurry is 16.7 wt% and the heat treatment time is 3 hours). Figure 15 is an image of the appearance of the present invention material D3 (the amount of chromium in the slurry is 16.7 wt% and the heat treatment time is 10 hours). Figure 16 is a SEM image of a portion of the present invention material D1 in which unevenness is formed. Figure 17 is a SEM image of a portion of the present invention material D2 in which unevenness is formed. Figure 18 is a SEM image of a portion of the present invention material D3 in which unevenness is formed. Figure 19 is an X-ray diffraction image of the present invention materials D1 to D3. Figure 20 is a SEM image showing the condition of a cross section of the present invention material D1. Figure 21 is a SEM image showing the condition of a cross section of the present invention material D2. Figure 22 is a SEM image showing the condition of a cross section of the present invention material D3. Note that the evaluation of the appearance, etc. of the present invention materials D1 to D3 is also shown in Table 1.

The X-ray diffraction was determined using an X-ray diffractometer RINT2000 made by Rigaku Corp., and the surface was observed using SEM. The film thickness of the chromium carbide was 10 µm or less for all the samples.

### [Analysis]

- In the case where the amount of the chromium in the slurry is 66.7 wt% (i.e., the amount of PVA per unit area of the carbon substrate is 3.33 × 10⁻³ g/cm², and the amount of Cr per unit area of the carbon substrate is 6.85 × 10⁻² g/cm²)
In the present invention material B1, surface unevenness (bumps and crevices) is observed (see reference numeral 9 in Fig. 3) over a wide area, and in the present invention material B2, surface unevenness is observed in a certain area (see reference numeral 9 in Fig. 4) although the area is smaller than that in the present invention material B1. In contrast, it is observed that in the present invention material B3, surface unevenness is very small and few. This is also clear from the images of Figs. 6 to 8, which show enlarged views of the portions in which unevenness is formed. The reason is considered to be that, as the reaction time increased (i.e., as the heat treatment time became longer), a surface flow occurred, causing the coating film of chromium carbide to flatten.

Moreover, as clearly seen from Fig. 9, it is observed that the longer the reaction time, the smaller the carbon peak (indicated with "E" in Fig. 9), but the greater the chromium carbide peak (indicated with "F" in Fig. 9). This is also clear from Figs. 10 to 12, which show that the film thickness of the chromium carbide film 11 increases as the reaction time increases.

- In the case where the amount of the chromium in the slurry is 16.7 wt% (i.e., the amount of PVA per unit area of the carbon substrate is 8.33 × 10⁻³ g/cm², and the amount of Cr per unit area of the carbon substrate is 1.67 × 10⁻² g/cn²)
In the present invention material D1, surface unevenness (bumps and crevices) is slightly observed (see Fig. 13). In the present invention material D2, the surface unevenness is greater than that in the present invention material D1 (see Fig. 14). In the present invention material, D3, the surface unevenness is even greater. This is also clear from the images of Figs. 16 to 18, which show SEM images of the portions in which unevenness is formed. The reason is considered to be that, as the reaction time increased (i.e., as the heat treatment time became longer), a surface flow occurred, causing the carbon substrate to partially be exposed, and also, the bubbles in the PVA bursted (see the numerous burst marks in Fig. 18).

Moreover, as clearly seen from Fig. 19, it is observed that the present invention material D2 shows a smaller carbon peak (indicated with "G" in Fig. 19) and a greater Chromium carbide peak (indicated with "H" in Fig. 19) than the present invention material D1. However, it is observed that the present invention material D3 shows an extremely greater carbon peak (indicated with "G" in Fig. 19) and an extremely smaller Chromium carbide peak (indicated with. "H" in Fig. 19) than the present invention materials D1 and D2. This is also clear from Figs. 20 to 22, which show that in the present invention material D2, the film thickness of the chromium carbide film 11 is greater than that in the present invention material D1, and that in the present invention material D3, almost no chromium carbide film 11 exists.
When taking into consideration the above-described results of the experiments, it is preferable that the concentration of the chromium in the slurry be 10 wt% or higher, that the concentration of the PVA in the slurry be 8 wt% or less, and that the heat treatment time be 10 hours or longer. In addition, it is preferable that the amount of chromium per unit area of the carbon substrate be 3.00 × 10⁻² g/cm² or greater and that the amount of PVA per unit area of the carbon substrate be 8.00 × 10⁻³ g/cm² or less.

### (Other Embodiments)

In the foregoing examples, the heat treatment is carried out under the presence of ammonium chloride after coating the slurry containing PVA and metal powder onto a carbon substrate. However, it is possible to carry out the heat treatment after coating a slurry containing ammonium chloride in addition to the PVA and the metal powder onto a carbon substrate. In this case as well, the carbon substrate is treated under an atmosphere of hydrogen halide gas. However, when NH₄Cl is added to the slurry, there are cases in which NH₄Cl may be separated. For this reason, it is desirable that the treatment be carried out in the manners described in the foregoing examples.

### INDUSTRIAL APPLICABILITY

The method of manufacturing a carbon material according to the present invention makes it possible to modify a surface of a carbon substrate by a very simple treatment, by simply heat-treating the carbon substrate to which metal powder has adhered in a vessel containing an atmosphere of hydrogen halide gas.

### DESCRIPTION OF REFERENCE NUMERALS

1 -- Carbon substrate
2 -- PVA
3 -- Chromium
4 -- Carbonized PVA
5 -- Chromium carbide

## Claims

1. A method of manufacturing a carbon material, **characterized by** comprising:
a first step of causing metal powder to adhere to a carbon substrate; and
a second step of heat-treating the carbon substrate to which the metal powder has adhered in a vessel containing an atmosphere of hydrogen halide gas.

2. The method of manufacturing a carbon material according to claim 1, wherein in the first step, the metal powder is caused to adhere to the carbon substrate by coating a slurry containing the metal powder and a binder onto the carbon substrate or dipping the carbon substrate into the slurry.

3. The method of manufacturing a carbon material according to claim 1 or 2, wherein in the second step, the hydrogen halide gas is a hydrogen chloride gas.

4. The method of manufacturing a carbon material according to claim 3, wherein in the second step, the carbon substrate to which the metal powder has adhered and ammonium chloride are enclosed in one and the same vessel and heat-treated.

5. The method of manufacturing a carbon material according to claim 4, wherein the amount of the ammonium chloride that is contained in the vessel is 1.00 × 10⁻⁴ g/cm³ or more with respect to the volume of the vessel.

6. The method of manufacturing a carbon material according to any one of claims 1 through 5, wherein the metal powder is chromium powder.
